# EUROPÄISCHE PATENTSCHRIFT

(11) **EP 3 094 866 B1**
(45) Veröffentlichungstag und Bekanntmachung des Hinweises auf die Patenterteilung: **08.01.2020**
(21) Anmeldenummer: 14808500.4
(22) Anmeldetag: 29.11.2014
(51) Int. Cl.: F16L 55/053, F15B 1/10

(54) **HYDROSPEICHER**
HYDRAULIC ACCUMULATOR
ACCUMULATEUR HYDRAULIQUE

(30) Priorität: 14.01.2014 DE 102014000378
(43) Veröffentlichungstag der Anmeldung: 23.11.2016
(73) Patentinhaber: Hydac Technology GmbH, 66280 Sulzbach/Saar (DE)
(72) Erfinder: BALTES, Herbert, 66679 Losheim (DE); KLOFT, Peter, 56235 Ransbach-Baumbach (DE)
(74) Vertreter: Bartels und Partner, Patentanwälte
(86) Internationale Anmeldenummer: PCT/EP2014/003197
(87) Internationale Veröffentlichungsnummer: WO 2015/106782

(56) Entgegenhaltungen:
- EP-A1- 0 790 411
- DE-A1- 1 525 730
- DE-B3- 10 235 080
- FR-A1- 2 266 019
- GB-A- 826 571
- US-A- 3 333 600

## Beschreibung

Die Erfindung betrifft einen Hydrospeicher, insbesondere Niederdruckspeicher, mit einem Speichergehäuse und einem darin angeordneten Trennelement in Form einer Speicherblase, die zwei Medienräume voneinander trennt, wobei das Speichergehäuse aus mindestens zwei Schalen gebildet ist, von denen mindestens eine eine zentrale Bohrung aufweist, über die in einer der Schalen die Speicherblase mit Arbeitsgas befüllbar ist, wobei die Schalen an ihren einander zugewandten Endbereichen miteinander verschweißt sind.

Aus GB 826,571 A ist bereits ein Hydrospeicher mit einem Speichergehäuse bekannt, das zwei miteinander verschweißte Schalen aufweist, die aus einem starken steifen Material gefertigt sind. Innerhalb des Speichergehäuses ist eine Speicherblase angeordnet, deren innerer Medienraum mit einem Arbeitsgas in Form von Luft durch eine zentrale Bohrung befüllbar ist, deren Rand mit einem von außen zugängigen Füllzapfen verschweißt ist, der einstückig mit einem innerhalb der Speicherblase angeordneten hohlen Gehäusekern ausgeführt ist, der einen Randwulst der Speicherblase an der einen Schale hält.

Hydrospeicher werden häufig bei Systemen eingesetzt, bei denen strömungsfähige Medien, wie Hydrauliköl oder sonstige Druckfluide oder Schmier- und/oder Kraftstoffe als Betriebsmedien Verwendung finden. Dabei können Hydrospeicher beispielsweise der Energiespeicherung, der Bereitstellung einer Fluidreserve, der Notbetätigung von Verbrauchern, zur Druckstoßdämpfung und dergleichen mehr dienen. Angesichts der vielfältigen Aufgaben für die die Hydrospeicher eingesetzt werden, werden Hydrospeicher in verhältnismäßig hohen Stückzahlen produziert. Die Höhe der Fertigungskosten und der für den Anwender resultierenden Gestehungskosten der Hydrospeicher haben daher eine große wirtschaftliche Bedeutung.

Im Hinblick auf diese Problematik stellt sich die Erfindung die Aufgabe, einen Hydrospeicher, insbesondere in Form eines Niederdruckspeichers, zur Verfügung zu stellen, der besonders kostengünstig herstellbar ist.

Gemäß dem kennzeichnenden Teil des Anspruchs 1 besteht eine wesentliche Besonderheit der Erfindung darin, dass die Schalen tiefgezogen aus metallischem Werkstoff gebildet sind, und dass die Speicherblase an ihrer Öffnung in dichter Anlage am Rand der Bohrung gehalten ist, die unter Bildung eines Füllanschlusses entsprechend klein dimensioniert, keinen Ein- oder Ausbau der Speicherblase ermöglicht.

Die Ausbildung des Speichergehäuses in Form einer geschlossenen Schweißkonstruktion, d.h. ohne zum Öffnen des Gehäuses vorgesehene, lösbare Verbindung mit zugehörigen Abdichtmitteln, eröffnet die Möglichkeit, den Speicher als sog. "Wegwerfspeicher" besonders rationell und kostengünstig zu fertigen. Bei der Ausbildung als nicht öffenbarer Wegwerfspeicher, bei dem die vor dem Verschweißen eingebaute Speicherblase im Schadensfall nicht austauschbar ist, ist am Speichergehäuse auch keine Bohrung mit einer für Montage oder Austausch der Blase ausreichenden Größe erforderlich, so dass sich mit besonders geringem Aufwand eine hohe Strukturfestigkeit des Behälters erreichen lässt.

Erfindungsgemäß gestaltet sich die Herstellung besonders rationell und kostengünstig, da für das Speichergehäuse tiefgezogene Schalen aus metallischem Werkstoff vorgesehen sind.
Bei besonders vorteilhaften Ausführungsbeispielen weist das Speichergehäuse zwei Halbschalen mit kreiszylindrischer Seitenwand und kugeligem Boden auf. Mit besonderem Vorteil können hierbei Halbschalen in Form von Gleichteilen vorgesehen sein.

Mit besonderem Vorteil kann in einer weiteren Halbschale im Zentrum von deren Boden ein Fluidanschluss vorgesehen sein. Dieser Fluidanschluss kann derart gestaltet sein, dass Sieblöcher im Boden der Halbschale ausgebildet sind. Insbesondere bei verhältnismäßig niedrigen Vorfülldrücken lässt sich dadurch auf besonders kostengünstige Weise am Fluidanschluss ein Schutzsieb ausbilden. Zusätzlich kann am Fluidanschluss ein Absperrventil angeordnet sein.

Gegenstand der Erfindung ist auch ein Verfahren zum Herstellen eines Hydrospeichers gemäß den Patentansprüchen 1 bis 6, wobei das Verfahren die im Patentanspruch 7 angegebenen Verfahrensschritte beinhaltet.

Nachstehend ist die Erfindung anhand eines in der Zeichnung dargestellten Ausführungsbeispiels im Einzelnen erläutert.

Es zeigen:

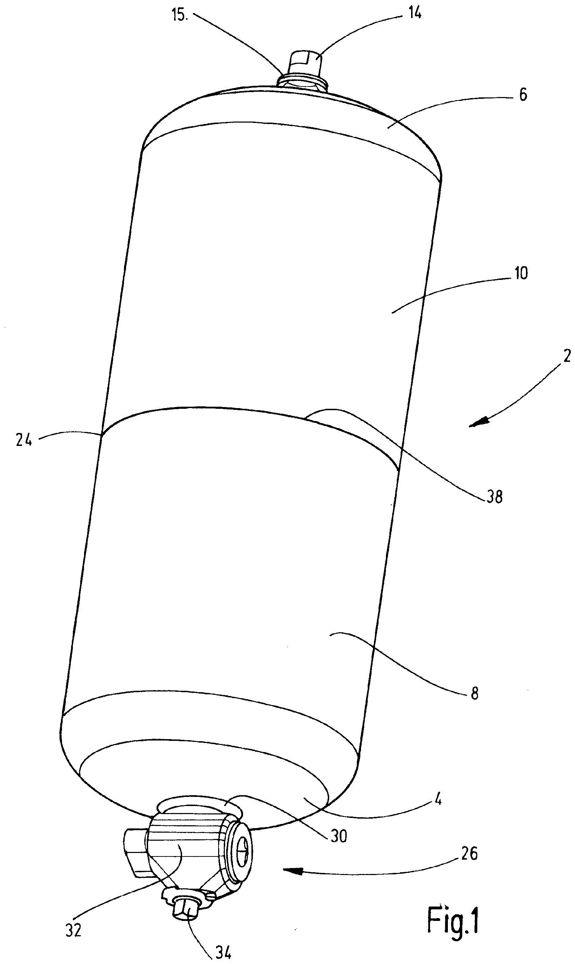

- Fig. 1: eine gegenüber einer praktischen Ausführungsform etwa um den Faktor 3 verkleinert gezeichnete perspektivische Schrägansicht eines Ausführungsbeispiels des erfindungsgemäßen Hydrospeichers und
- Fig. 2: eine leicht schematisiert vereinfachte, aufgeschnittene Darstellung der Fig. 1.

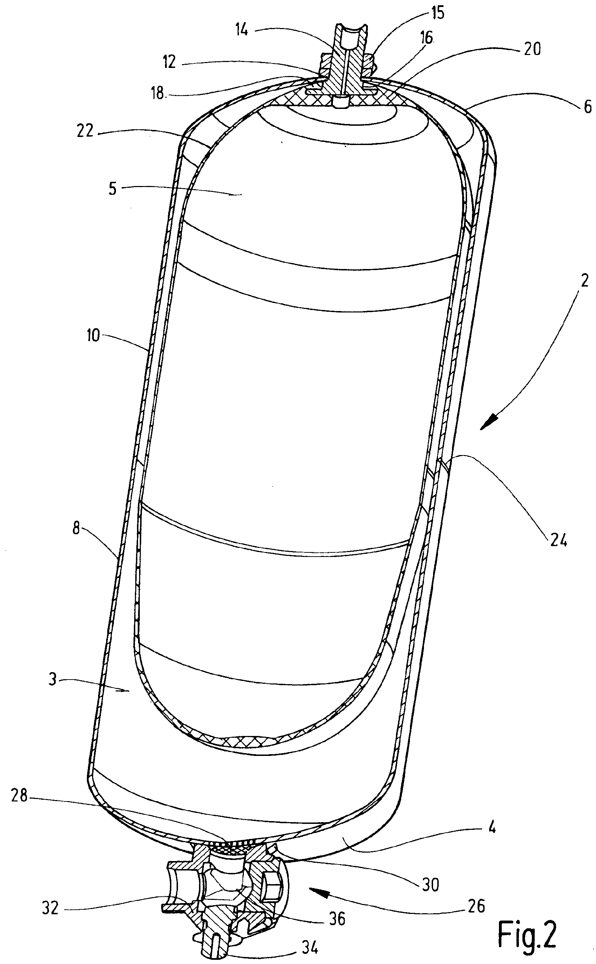

Das in der Zeichnung dargestellte Ausführungsbeispiel des erfindungsgemäßen Hydrospeichers in Form eines Blasenspeichers weist ein Speichergehäuse 2 in Form eines Kreiszylinders auf, der an beiden Enden durch Endteile 4 und 6 abgeschlossen ist, die jeweils gleichartig kugelartig gewölbt sind. Wie aus der Schnittdarstellung von Fig. 2 am deutlichsten ersichtlich ist, ist das Gehäuse 2 aus zwei als Gleichteile ausgebildete Halbschalen 8 und 10 aufgebaut. Diese Halbschalen 8, 10 sind aus einem metallischen Werkstoff durch Tiefziehen gebildet, so dass die Endteile 4, 6 jeweils den Schalenboden der jeweiligen, einteiligen Halbschale 8 bzw. 10 bilden. Im Boden jeder Halbschale 8, 10 ist im Zentralbereich, also koaxial zur Zylinderachse, ein Mediendurchgang ausgebildet. Bei dem in der Zeichnung oberen Endteil 6 ist hierfür eine Bohrung 12 für ein Anschlussteil 14 vorgesehen. Dieses führt zur Gasseite 5 des Speichers, die durch das Innere einer Speicherblase 22 gebildet ist, die die Gasseite 5 von der umgebenden Fluidseite 3 trennt. In der bei Blasenspeichern an sich bekannten Weise durchgreift das Anschlussteil 14 die Bohrung 12 im Endteil 6 und weist an seinem inneren Ende einen Flansch 18 auf. Dieser ist mit einem Randwulst 20 in Eingriff, der sich an der Füllöffnung 16 der Speicherblase 22 aus elastomerem Material befindet. Mittels einer Mutter 24 auf dem Gewindeschaft des Anschlussteils 14 lässt sich so die Füllöffnung 16 der Blase 22 dicht am Rand der Bohrung 12 des Endteils 6 verspannen. Da das Speichergehäuse 2 nach dem Verschweißen der Halbschalen 8, 10 an ihrem jeweiligen Endrand 24 nicht mehr geöffnet werden kann, kann die vor dem Schweißen montierte Speicherblase 22 nach Schließen des Gehäuses 2 nicht mehr demontiert werden, weil die Bohrung 12, die lediglich zur Bildung des Füllanschlusses dient und entsprechend klein dimensioniert ist, keinen Einbau oder Ausbau der Speicherblase 22 ermöglicht. Die Gestaltung des Gehäuses 2 ohne eine Bohrung, deren Größe für Ein- oder Ausbau der Blase 22 ausreichend wäre, ist für die Strukturfestigkeit des Speichergehäuses 2 von großem Vorteil.

An dem Endteil 4, das den in der Zeichnung unten liegenden Schalenboden bildet, ist als Mediendurchgang ein Fluidanschluss 26 vorgesehen. Bei dem erfindungsgemäßen Hydrospeicher, der für Vorfülldrücke der Speicherblase 22 im Niederdruckbereich vorgesehen ist, beispielsweise für einen Auslegungsdruck von 16 bar, kann der Fluidanschluss 26 in dem zur Zylinderachse koaxialen Zentralbereich des Endteils 4 eine eingestanzte Lochung aufweisen, die ein Lochsieb 28 bildet. Ein Anschlusskörper 32 ist mittels einer Schweißstelle 30 am Endteil 4 befestigt. Beim vorliegenden Ausführungsbeispiel weist der Anschlusskörper 32 ein Fluidventil in Form eines mittels eines Drehknebels 34 betätigbaren Absperrhahns 36 auf.
Die Schweißverbindung an den Endrändern 24 ist vorteilhafterweise derart ausgebildet, dass sich die umfängliche Schweißraupe 38 an der Außenseite des Gehäuses 2 erstreckt und die Gehäuseinnenwand über die Trennstelle hinweg glattflächig verbleibt, so dass bei Berührung mit sich bewegenden Teilen der Blase 22 kein schädliches Scheuern stattfindet. Anders als bei dem gezeigten Ausführungsbeispiel, bei dem das Gehäuse 2 vollständig aus zwei Halbschalen 8, 10 aufgebaut ist, könnten ein zusätzliches Schalenteil oder mehrere Schalenteile in Form von Rohrabschnitten zwischen den Halbschalen 8, 10 eingeschweißt sein. Ebenso kann bei dem in Frage kommenden Niederdruckbereich ein insbesondere für Tiefziehen geeignetes Kunststoffmaterial für das Speichergehäuse 2 vorgesehen sein.

## Patentansprüche

1. Hydrospeicher, insbesondere Niederdruckspeicher, mit einem Speichergehäuse (2) und einem darin angeordneten Trennelement in Form einer Speicherblase (22), die zwei Medienräume (3, 5) voneinander trennt, wobei das Speichergehäuse (2) aus mindestens zwei Schalen (8, 10) gebildet ist, von denen mindestens eine (10) eine zentrale Bohrung (12) aufweist, über die in einer (10) der Schalen (8, 10) die Speicherblase (22) mit Arbeitsgas befüllbar ist, wobei die Schalen (8, 10) an ihren einander zugewandten Endbereichen (24) miteinander verschweißt sind, **dadurch gekennzeichnet, dass** die Schalen (8, 10) tiefgezogen aus metallischem Werkstoff gebildet sind, und dass die Speicherblase (22) an ihrer Öffnung (16) in dichter Anlage am Rand der Bohrung (12) gehalten ist, die, unter Bildung eines Füllanschlusses entsprechend klein dimensioniert, keinen Ein- oder Ausbau der Speicherblase (22) ermöglicht.

2. Hydrospeicher nach Anspruch 1, **dadurch gekennzeichnet, dass** das Speichergehäuse zwei Halbschalen (8, 10) mit kreiszylindrischer Seitenwand und kugeligem Boden (4, 6) aufweist.

3. Hydrospeicher nach Anspruch 1 oder 2, **dadurch gekennzeichnet, dass** Halbschalen (8, 10) in Form von Gleichteilen vorgesehen sind.

4. Hydrospeicher nach einem der vorstehenden Ansprüche, **dadurch gekennzeichnet, dass** in einer weiteren Halbschale (8) im Zentrum von deren Boden (4) ein Fluidanschluss (26) vorgesehen ist.

5. Hydrospeicher nach einem der vorstehenden Ansprüche, **dadurch gekennzeichnet, dass** am Fluidanschluss (26) Sieblöcher (28) im Boden (4) der Halbschale (8) ausgebildet sind.

6. Hydrospeicher nach einem der vorstehenden Ansprüche, **dadurch gekennzeichnet, dass** am Fluidanschluss (26) ein Absperrventil (36) angeordnet ist.

7. Verfahren zum Herstellen eines Hydrospeichers nach einem der Ansprüche 1 bis 6 mit den aufeinanderfolgenden Schritten:
- Herstellen zumindest zweier Schalen (8, 10) durch Tiefziehen aus metallischem Werkstoff;
- Ausbilden eines Mediendurchgangs (12, 28) am Boden (4 bzw. 6) der Schalen (8, 10);
- Anbringen der Öffnung (16) einer Speicherblase (22) am Mediendurchgang (12) einer Schale (10); und
- Herstellen eines die Speicherblase (22) enthaltenden, geschlossenen Speichergehäuses (2) durch Verschweißen der Schalen (8, 10) an deren Rändern (24) nach Montieren der Speicherblase (22) im Gehäuse (2).

## Claims

1. Hydraulic accumulator, in particular low-pressure accumulator, with an accumulator housing (2) and a separating element in the form of an accumulator bladder (22) arranged therein, which separates two media chambers (3, 5) from each other, wherein the accumulator housing (2) is formed of at least two shells (8, 10), of which at least one (10) has a central hole (12) via which the accumulator bladder (22), in one (10) of the shells (8, 10), can be filled with working gas, wherein the shells (8, 10) are welded together at their end regions (24) directed towards each other, **characterised in that** the shells (8, 10) are formed from deep-drawn metallic material, and **in that** the accumulator bladder (22) at its opening (16) is held in tight contact on the margin of the hole (12) which, while forming a filling connection of correspondingly small dimensions, prevents the accumulator bladder (22) from being installed or removed.

2. Hydraulic accumulator according to claim 1, **characterised in that** the accumulator housing has two half-shells (8, 10) with circular cylindrical side wall and spherical base (4, 6).

3. Hydraulic accumulator according to claim 1 or 2, **characterised in that** half-shells (8, 10) are provided in the form of common parts.

4. Hydraulic accumulator according to one of the preceding claims, **characterised in that** a fluid connection (26) is provided in a further half-shell (8) in the centre of its base (4).

5. Hydraulic accumulator according to one of the preceding claims, **characterised in that** perforated strainer holes (28) are formed in the base (4) of the half-shell (8) at the fluid connection (26).

6. Hydraulic accumulator according to one of the preceding claims, **characterised in that** a shut-off valve (36) is arranged at the fluid connection (26).

7. Method for the production of a hydraulic accumulator according to one of claims 1 to 6 having the consecutive steps:
Production of at least two shells (8, 10) by deep drawing of metallic material;
Forming of a media passage (12, 28) on the base (4 or 6) of the shells (8, 10);
Attachment of the opening (16) of an accumulator bladder (22) to the media passage (12) of one shell (10); and
Production of a closed accumulator housing (2) containing the accumulator bladder (22) by welding shut the shells (8, 10) at their margins (24) after fitting the accumulator bladder (22) in the housing (2).

## Revendications

1. Accumulateur hydraulique, notamment accumulateur basse pression, comprenant une enveloppe (2) d'accumulateur et un élément de séparation qui y est disposé sous la forme d'une vessie (22) d'accumulateur, qui sépare deux espaces (3, 5) pour des fluides l'un de l'autre, l'enveloppe (2) de l'accumulateur étant formée d'au moins deux coques (8, 10), dont l'une (10) au moins a un trou (12) central, par lequel, dans l'une (10) des coques (8, 10), la vessie (22) de l'accumulateur peut être remplie de gaz de travail, les coques (8, 10) étant soudées entre elles à leurs parties (24) d'extrémité tournées l'une vers l'autre, **caractérisé en ce que** les coques (8, 10) sont formées par emboutissage profond en un matériau métallique et **en ce que** la vessie (22) de l'accumulateur est retenue à son ouverture (16) en contact étroit au bord du trou (12), qui, en étant dimensionné de manière adéquate petite avec formation d'un raccord de remplissage, ne rend pas possible un montage ou un démontage de la vessie (22) de l'accumulateur.

2. Accumulateur hydraulique suivant la revendication 1, **caractérisé en ce que** l'enveloppe de l'accumulateur a deux demi-coques (8, 10) de paroi latérale cylindrique de section circulaire et des fonds (4, 6) sphériques.

3. Accumulateur hydraulique suivant la revendication 1 ou 2, **caractérisé en ce que** les demi-coques (8, 10) sont prévues sous la forme de pièces pareilles.

4. Accumulateur hydraulique suivant l'une des revendications précédentes, **caractérisé en ce qu'**il est prévu, dans une autre demi-coque (8), au centre de son fond (4), un raccord (26) pour du fluide.

5. Accumulateur hydraulique suivant l'une des revendications précédentes, **caractérisé en ce que**, sur le raccord (26) pour du fluide, des trous (28) de tamisage sont constitués dans le fond (4) de la demi-coque (8).

6. Accumulateur hydraulique suivant l'une des revendications précédentes, **caractérisé en ce qu'**un robinet (36) d'arrêt est monté sur le raccord (26) pour du fluide.

7. Procédé de fabrication d'un accumulateur hydraulique suivant l'une des revendications 1 à 6, ayant les stades successifs :
- on fabrique au moins deux coques (8, 10) par emboutissage profond en matériau métallique ;
- on forme un passage (12, 28) pour des fluides au fond (4 ou 6) des coques (8, 10) ;
- on met l'ouverture (16) d'une vessie (22) d'accumulateur dans le passage (12) pour des fluides d'une coque (10) ; et
- on fabrique une enveloppe (2) d'accumulateur, fermée et contenant la vessie (22) d'accumulateur, en soudant les coques (8, 10) sur leurs bords (24), après avoir monté la vessie (22) de l'accumulateur dans l'enveloppe (2).
